# DEMANDE DE BREVET EUROPEEN

(11) **EP 1 675 232 A2**
(43) Date de publication de la demande: **28.06.2006**
(21) Numéro de dépôt: 05352018.5
(22) Date de dépôt: 22.12.2005
(51) Int. Cl.: H02G 3/04

(54) **Conduit en matière synthétique destiné au cheminement de câbles ou conducteurs électriques**

(30) Priorité: 24.12.2004 FR 0413899
(71) Demandeur: Société d'Usinage des Tubes pour, 54700 Pont à Mousson (FR)
(72) Inventeur: Murtin, Jacques, 54000 Nancy (FR)
(74) Mandataire: Hartmann, Jean-Luc

(57) **Abrégé**

Un tel conduit en matière synthétique est destiné au cheminement de câbles et/ou de conducteurs électriques. Il comporte une paroi annelée (2) ainsi qu'une paroi lisse (4).

La paroi annelée (2) constitue la paroi interne du conduit tandis que sa paroi externe (4) est lisse et tubulaire.

Avantageusement la paroi externe lisse (4) est réalisée dans un matériau plus élastique que celui utilisé pour la réalisation de la paroi interne annelée (2).

## Description

La présente invention concerne un conduit en matière synthétique destiné au cheminement de câbles ou de conducteurs électriques.

La présente invention concerne plus particulièrement des conduits utilisés pour la protection et le rangement de conducteurs et/ou de câbles isolés dans les installations électriques ou les systèmes de télécommunication. Ces câbles et/ou conducteurs sont destinés à des tensions en courant alternatif allant jusqu'à 1000 V ou même 1500 V en courant continu.

De tels conduits de protection se trouvent dans des applications industrielles mais aussi dans des applications domestiques. Ils sont destinés à assurer une protection mécanique, contre l'écrasement et les chocs, une protection thermique, une étanchéité et un isolement électrique. Il convient qu'un tel conduit assure une bonne protection des conducteurs et/ou câbles qu'il contient, que le conduit, et les câbles et/ou conducteurs qu'il contient, soit ou non noyé dans un matériau de construction.

Ces conduits sont soumis à des contraintes d'écrasement mais également à des chocs notamment au moment de leur installation. Ils peuvent également au cours de leur vie subir des contraintes thermiques. Il convient également de prévoir le cas où un tel conduit est soumis à un incendie.

Des normes, par exemple la norme NF EN 50086 définissent les essais auxquels des conduits du type précité doivent résister de manière à pouvoir assurer une bonne protection des câbles et/ou conducteurs qu'ils contiennent.

D'après cette norme, les conduits de ce type doivent résister d'une part à un niveau de résistance à l'écrasement prédéfini et d'autre part à des impacts selon un niveau d'énergie également prédéfini, tout cela sans que le conduit ne se fissure extérieurement.

Ces deux contraintes apparaissent comme étant antinomiques. En effet, la tenue à l'écrasement demande d'avoir une paroi la plus rigide possible alors que la tenue aux impacts demande une paroi qui doit, au contraire, être plus élastique.

A ces contraintes normatives viennent s'ajouter des contraintes économiques qui imposent d'utiliser un minimum de matière pour répondre aux exigences précitées.

Les conduits de l'art antérieur connu sont constitués d'un tube avec une paroi lisse ou d'un tube avec une paroi annelée ou comportent une paroi interne lisse soudée dans une paroi externe tubulaire annelée. Pour répondre aux exigences normatives, les fabricants de tels conduits augmentent l'épaisseur des parois de manière à répondre aux exigences imposées. Ceci aboutit à des conduits qui d'une part présentent une masse linéique élevée et d'autre part un prix de revient élevé lui aussi puisque dépendant dans une large mesure de la quantité de matière utilisée.

La présente invention a alors pour but de fournir un conduit qui d'une part soit résistant à l'écrasement et aux chocs et d'autre part présente une masse linéique relativement faible.

A cet effet, elle propose un conduit en matière synthétique destiné au cheminement et à la protection mécanique de câbles et/ou de conducteurs électriques comportant une paroi annelée ainsi qu'une paroi lisse.

Selon la présente invention, la paroi annelée constitue la paroi interne du conduit tandis que sa paroi externe est lisse et tubulaire.

Cette structure originale permet de manière surprenante de limiter la masse linéique du conduit tout en lui procurant des caractéristiques très intéressantes, tant en termes de tenue à l'écrasement que de tenue aux chocs. La paroi interne annelée assure essentiellement la tenue à l'écrasement du conduit tandis que la paroi externe lisse assure quant à elle essentiellement la tenue aux chocs.

Dans une forme de réalisation préférée, la paroi lisse est rétreinte sur la paroi interne annelée. Aucune soudure n'est réalisée entre les deux parois, permettant ainsi une meilleure flexibilité du conduit. Les deux parois peuvent par exemple être obtenues par extrusion.

Pour obtenir une meilleure résistance mécanique à l'écrasement, la paroi annelée est avantageusement annelée perpendiculairement à son axe.

Pour une meilleure absorption des chocs, la paroi externe lisse est réalisée de préférence dans un matériau plus élastique que celui utilisé pour la réalisation de la paroi interne annelée.

Dans un mode de réalisation préféré mais non exclusif, la paroi interne annelée est réalisée en polypropylène tandis que la paroi externe lisse est réalisée en polyéthylène basse densité.

Des bonnes performances mécaniques de tenue à l'écrasement sont obtenues lorsque la paroi interne annelée présente un module d'élasticité en flexion compris entre 1000 et 2000 MPa. La paroi externe lisse présente quant à elle par exemple un module d'élasticité en flexion compris entre 150 et 500 MPa.

La présente invention concerne également un procédé de réalisation d'un conduit destiné au cheminement de câbles et/ou de conducteurs électriques, ce conduit étant résistant à l'écrasement, caractérisé en ce qu'il comporte une étape au cours de laquelle un tube lisse est rétreint autour d'un tube annelé.

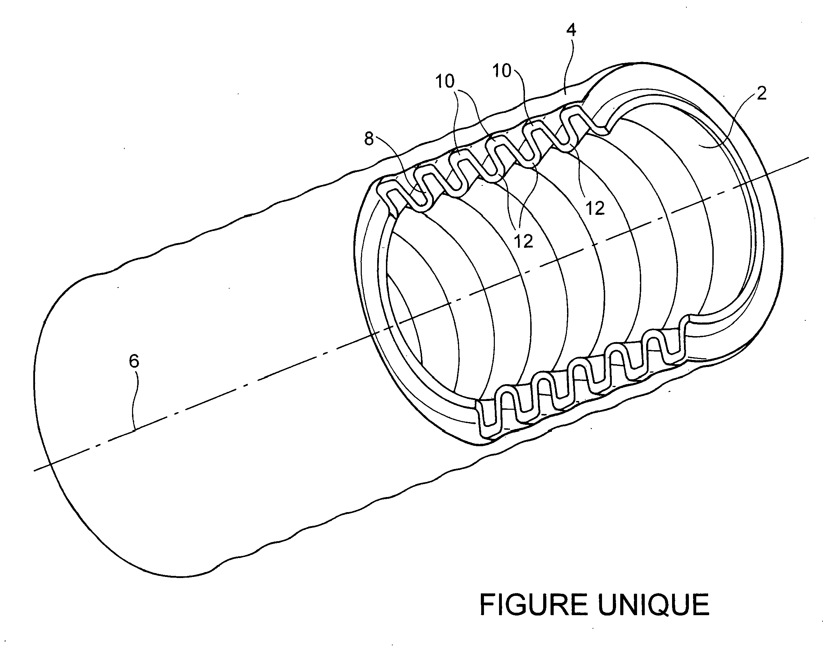

Des détails et avantages de la présente invention ressortiront mieux de la description qui suit, faite en référence au dessin schématique annexé, sur lequel :

L'unique figure représente en perspective et partiellement en coupe un conduit selon l'invention.

Sur l'unique figure on reconnaît un tronçon de conduit. Celui-ci comporte un tube interne avec une paroi annelée 2 et un tube externe avec une paroi lisse 4.

Le tube annelé intérieur et le tube lisse extérieur sont coaxiaux et présentent donc un axe longitudinal 6 commun.

La paroi interne annelée 2 présente une succession de flancs radiaux annulaires 8. Deux flancs radiaux annulaires 8 successifs sont reliés alternativement par un segment cylindrique 10 et par une zone annulaire torique 12. Les segments cylindriques 10 et les zones annulaires toriques 12 sont également centrées sur l'axe 6. Les segments cylindriques définissent le diamètre extérieur de la paroi interne annelée 2 tandis que les zones annulaires toriques 12 définissent le diamètre intérieur de la paroi interne annelée 2.

A titre d'exemple, la paroi interne annelée 2 est réalisée dans une matière synthétique thermoplastique. Il s'agit par exemple d'un polypropylène. Son module d'élasticité en flexion est par exemple de l'ordre de 1500 MPa.

La paroi externe lisse 4 présente un diamètre intérieur adapté au diamètre extérieur de la paroi interne annelée 2. Cette paroi externe lisse 4 est rétreinte sur la paroi interne annelée 2. Ainsi, lorsque la paroi externe lisse 4 est en place sur la paroi interne annelée 2, sa surface extérieure présente de légères ondulations correspondant aux anneaux de la paroi interne annelée 2.

Le tube extérieur correspondant à la paroi externe lisse 4 est par exemple lui aussi réalisé dans une matière synthétique thermoplastique. Il s'agit par exemple d'un polyéthylène basse densité. Ce matériau présente, à titre d'exemple non limitatif, un module d'élasticité en flexion voisin de 300 MPa.

Un tel conduit selon l'invention associe ainsi une paroi interne annelée 2 présentant une grande inertie, réalisée avec un matériau thermoplastique à haut module d'élasticité à une paroi externe lisse 4 à faible inertie réalisée avec un matériau thermoplastique à bas module. La paroi interne annelée 2 est ici destinée à assurer une bonne tenue mécanique à l'écrasement. La paroi externe lisse 4 permet quant à elle d'assurer la tenue aux chocs imposée par les normes et également de maintenir l'étanchéité et la tenue diélectrique du conduit.

Les deux parois sont obtenues par exemple par extrusion. La paroi externe lisse 4, dont la fonction essentielle est d'assurer la tenue aux chocs, est uniquement gainée et rétreinte sur la paroi interne annelée 2. Aucune soudure entre ces deux parois n'est réalisée. On obtient ainsi un tube lisse extérieur rétreint sur un tube annelé intérieur. De cette manière, le conduit proposé permet de présenter une flexibilité importante.

Le conduit décrit ci-dessus permet d'avoir, avec une masse linéique relativement faible, des caractéristiques mécaniques de tenue aux chocs et à l'écrasement très intéressantes. Lors de tests de tenue à la compression et aux chocs, la combinaison d'une paroi externe lisse plus élastique gainée sur une paroi interne annelée plus rigide permet d'éviter l'apparition de fissures visibles.

Un conduit selon l'invention, grâce notamment à sa masse relativement faible, présente un prix de revient peu élevé. Il permet de réaliser une économie de matière sans pénaliser les performances du produit.

La présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

Ainsi, les matériaux utilisés sont donnés à titre d'exemples non limitatifs. Il en va de même pour les modules d'élasticité.

La paroi interne annelée décrite plus haut est une paroi annelée perpendiculairement à son axe. Il est envisageable ici d'utiliser également un tube interne avec une paroi annelée hélicoïdale, ou d'un autre type. La forme décrite de la paroi annelée avec des flancs radiaux, des sections cylindriques et des zones toriques n'est nullement limitative. Toute autre forme de réalisation d'une paroi annelé convient.

## Revendications

1. Conduit en matière synthétique destiné au cheminement et à la protection mécanique de câbles et/ou de conducteurs électriques comportant une paroi annelée (2) ainsi qu'une paroi lisse (4), **caractérisé en ce que** la paroi annelée (2) constitue la paroi interne du conduit tandis que sa paroi externe (4) est lisse et tubulaire.

2. Conduit selon la revendication 1, **caractérisé en ce que** la paroi lisse (4) est rétreinte sur la paroi interne annelée (2).

3. Conduit selon l'une des revendications 1 ou 2, **caractérisé en ce que** la paroi annelée (2) est annelée perpendiculairement à son axe (6).

4. Conduit selon l'une des revendications 1 à 3, **caractérisé en ce que** la paroi externe lisse (4) est réalisée dans un matériau plus élastique que celui utilisé pour la réalisation de la paroi interne annelée (2).

5. Conduit selon l'une des revendications 1 à 4, **caractérisé en ce que** la paroi interne annelée (2) est réalisée en polypropylène.

6. Conduit selon l'une des revendications 1 à 5, **caractérisé en ce que** la paroi externe lisse (4) est réalisée en polyéthylène basse densité.

7. Conduit selon l'une des revendications 1 à 6, **caractérisé en ce que** la paroi interne annelée (2) présente un module d'élasticité en flexion compris entre 1000 et 2000 MPa.

8. Conduit selon l'une des revendications 1 à 7, **caractérisé en ce que** la paroi externe lisse (4) présente un module d'élasticité en flexion compris entre 150 et 500 MPa.

9. Procédé de réalisation d'un conduit destiné au cheminement de câbles et/ou de conducteurs électriques, ce conduit étant résistant à l'écrasement, **caractérisé en ce qu'**il comporte une étape au cours de laquelle un tube lisse est rétreint autour d'un tube annelé.
